# EUROPÄISCHE PATENTANMELDUNG

(11) **EP 3 751 415 A1**
(43) Veröffentlichungstag der Anmeldung: **16.12.2020**
(21) Anmeldenummer: 19179883.4
(22) Anmeldetag: 13.06.2019
(51) Int. Cl.: G06F 9/455, G06F 8/60, G06F 8/20

(54) **CONTAINERISIERTE ENTWICKLUNGSINFRASTRUKTUR**

(71) Anmelder: Siemens Aktiengesellschaft, 80333 München (DE)
(72) Erfinder: Birk, Gunther, 91054 Erlangen/Buckenhof (DE); Gelbke, Lars, 06343 Mansfeld (DE)

(57) **Zusammenfassung**

Die Erfindung betrifft eine containerisierte Entwicklungsinfrastruktur, aufweisend mindestens einen ersten Container aufweisend mindestens ein erstes Softwarepaket für zumindest einen Teil der Entwicklungsinfrastruktur; Mindestens einen zweiten Container aufweisend mindestens ein zweites Softwarepaket für zumindest einen Teil der Entwicklungsinfrastruktur und Mindestens eine Container-Engine auf mindestens einer Recheneinheit, eingerichtet zum Erstellen und Ausführen der mindestens zwei Container.

## Beschreibung

### 1. Technisches Gebiet

Die Erfindung betrifft eine containerisierte Entwicklungsinfrastruktur. Die Erfindung kann in jeglichen Softwarebezogenen Bereichen genutzt und eingesetzt werden.

### 2. Stand der Technik

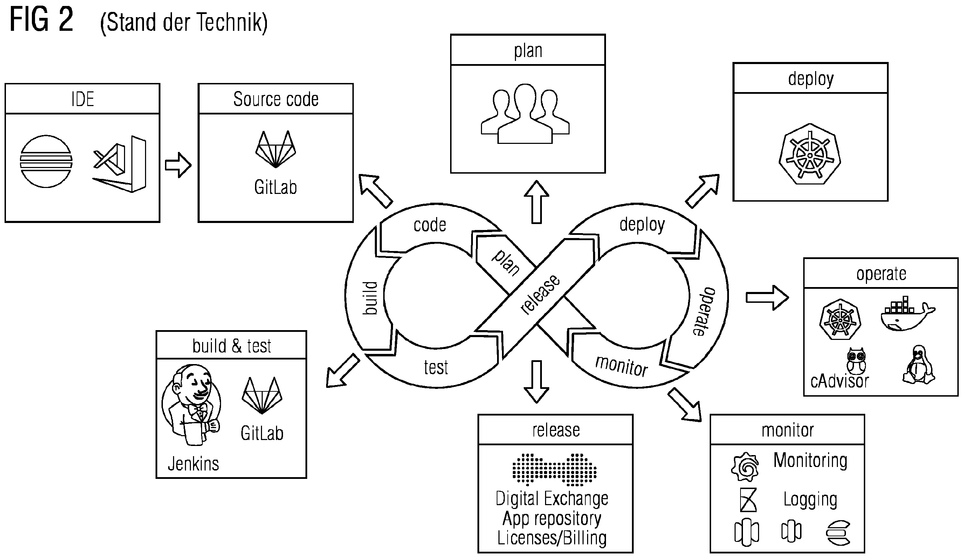

DevOps ist aus dem Stand der Technik bekannt. DevOps beschreibt einen Prozessverbesserungs-Ansatz aus den Bereichen der Softwareentwicklung und Systemadministration. *DevOps* ist ein Kunstwort aus den Begriffen *Development* (*Entwicklung*) und IT *Operations* (*IT-Betrieb*). *DevOps* soll durch gemeinsame Anreize, Prozesse und Software-Werkzeuge (*tools*) eine effektivere und effizientere Zusammenarbeit der Bereiche *Dev, Ops* und Qualitätssicherung (QS) ermöglichen. Figur 2 zeigt eine herkömmliche DevOps-Entwicklungsinfrastruktur gemäß dem Stand der Technik, auch Toolchain genannt.

Herkömmlicherweise bauen Configuration Manager, Information Technology und Entwickler für spezifische Bereiche eigene Umgebungen auf und warten diese. Die Configuration Manager sind meist von der eigentlichen Entwicklung getrennt. Die Wartung dieser Umgebungen erfordert jedoch meist mehrere verschiedene Expertisen und neigt dazu unvollständig, aufwendig in der Pflege und fehleranfällig zu sein.

Die vorliegende Erfindung stellt sich daher die objektive technische Aufgabe eine containerisierte Entwicklungsinfrastruktur bereitzustellen, welche zuverlässiger und effizienter ist.

### 3. Zusammenfassung der Erfindung

Die oben genannte Aufgabe wird erfindungsgemäß durch eine containerisierte Entwicklungsinfrastruktur gelöst, aufweisend:
a. Mindestens einen ersten Container aufweisend mindestens ein erstes Softwarepaket für zumindest einen Teil der Entwicklungsinfrastruktur;
b. Mindestens einen zweiten Container aufweisend mindestens ein zweites Softwarepaket für zumindest einen Teil der Entwicklungsinfrastruktur; und
c. Mindestens eine Container-Engine auf mindestens einer Recheneinheit, eingerichtet zum Erstellen und Ausführen der mindestens zwei Container.

Die Erfindung betrifft eine containerisierte oder containerbasierte Entwicklungsinfrastruktur. Beispielsweise ist die Entwicklungsinfrastruktur eine IT-Infrastruktur, wie DevOps-Infrastruktur oder auch DevOps-Toolchain genannt.

Die erfindungsgemäße containerisierte Entwicklungsinfrastruktur weist eine Mehrzahl von Containern für die verschiedenen Teile der gesamten Entwicklungsstruktur auf. Die Container weisen jeweils ein Softwarepaket auf. Mit anderen Worten, ist jeweils eine Anwendung bsp. mit Bibliotheken und deren Abhängigkeiten in einem Container zusammenpackt. Die Container können dementsprechend als abgeschlossene Einheiten betrachtet werden.

Die Container bieten folglich einen logischen Mechanismus der Paketerstellung, der darauf beruht, dass Anwendungen von ihrer Ausführungsumgebung abstrahiert werden. Mit dieser Entkopplung können containerbasierte Anwendungen einfach und konsistent bereitgestellt werden, unabhängig davon, ob es sich bei der Zielumgebung um ein privates Rechenzentrum, die öffentliche Cloud oder auch um den persönlichen Laptop eines Entwicklers handelt. Die Containerisierung sorgt dafür, dass sich Entwickler auf ihre Anwendungslogik und -abhängigkeiten konzentrieren können, während sich operative IT-Teams auf die Bereitstellung und Verwaltung konzentrieren dürfen, ohne sich Gedanken über Anwendungsdetails wie spezifische Softwareversionen und Konfigurationen machen zu müssen.

Die Container-Engine kann die Container erstellen sowie diese Container anschließend ausführen. Der Vorteil liegt darin, dass die Erstellung der Container in effizienter Art und Weise durch ein und dieselbe Container-Engine erfolgt. Dabei können Beschreibungsdateien genutzt werden, welche eine vollständig automatisiert Container Erzeugung erlauben. Ferner können sie einer Versionsverwaltung unterliegen.

Die containerisierte Entwicklungsinfrastruktur kann weiterhin mindestens eine zentrale Container-Registry zur Verwaltung, Lagerung und/oder Bereitstellung des mindestens einen ersten Containers und/oder des mindestens einen zweiten Containers aufweisen. Diese zentrale Container-Registry ermöglicht eine zentrale Lagerung der erzeugten Container.

Die erzeugten Container können von der zentralen Container-Registry auf eine oder mehrere Recheneinheiten übertragen und auf diesen ausgeführt werden. Beispielhafte Recheneinheiten sind Edge Computing Device, Source Code Server, Build Server, Entwicklungsrechner. Die Recheneinheit führt anschließend die Container und die darin enthaltene Software aus, um die Aufgabe zu erfüllen. Eine in der Cloud laufende Recheneinheit ist somit in der Lage den Container, welcher die Software zur Übersetzung von Source-Code beinhaltet, aus der zentralen Container-Registry zu laden, anschließend auszuführen und somit die eigentliche Source-Code Übersetzung durchzuführen.

Hinsichtlich einer beispielhaften DevOps-Toolchain als Entwicklungsinfrastruktur gemäß Figur 2, erfüllen die Container jeweils eine bestimmte Funktion oder Aufgabe um zusammengenommen das Endprodukt zu bilden. Der Teil der Entwicklungsinfrastruktur kann entsprechend ein Tool oder eine Anwendung aus der DevOps-Toolchain sein, wie Build, Test, Release gemäß Figur 2. Der Teil der Entwicklungsinfrastruktur kann an den entsprechenden Host oder die Host-Instanz, insbesondere jede beliebige Recheneinheit bereitgestellt werden.

Die erfindungsgemäße Containerisierung ermöglicht, dass die Integration von Entwicklung mit Operations durchgängig angeboten und somit die DevOps Schleife geschlossen werden kann. Dies wiederum ermöglicht maßgeschneiderte und effiziente Lösungen mit deutlich schnelleren Release-Zyklen, verbesserte Produkt-Qualität und schnellere Reaktionszeiten auf Kundenanforderungen oder andere Bedingungen.

In einer Ausgestaltung ist die Container-Engine eine Container-Engine, ausgewählt aus der Gruppe bestehend aus: Docker, Kubernetes, LXD und Rocket.

In einer weiteren Ausgestaltung wird die Container-Engine durch eine Softwarebereitstellungsanwendung eingerichtet, ausgewählt aus der Gruppe bestehend aus: Terraform, Ansible und Vagrant.

Dementsprechend können unterschiedliche Container-Engines und deren Software-Anwendungen eingesetzt werden. Dadurch kann vorteilhafterweise abhängig von der konkreten Anwendung der containerisierten Entwicklungsinfrastruktur, dem zugrundeliegenden System, Nutzeranforderungen oder anderen Bedingungen flexibel die Container-Engine ausgewählt sowie angepasst werden.

In einer weiteren Ausgestaltung wird die Container-Engine, der mindestens eine erste Container und/oder der mindestens eine zweite Container von einem Backend-Management Service verwaltet. Der Begriff "Service" steht für Dienst, Dienstleistung, Software-Dienst oder Software-Dienstleistung. Das Verwalten beinhaltet unterschiedliche Management- und/oder Monitoring-Funktionen, wie das Anmelden der Einheiten des Netzwerks und/oder deren zugehörigen Recheneinheiten. Die Verwaltung kann remote erfolgen. Dadurch kann die gesamte containerisierte Entwicklungsinfrastruktur auf effiziente Art und Weise verwaltet und/oder überwacht werden.

Der administrative Aufwand für den Nutzer, wie Instandhalter der Entwicklungsinfrastruktur, wird dadurch vorteilhafterweise auf die Services verlagert und somit entlastet, ohne dabei auf Flexibilität und Vertraulichkeit zu verzichten. Dadurch wird die Qualität, Stabilität und Verfügbarkeit der einzelnen Services erhöht was zu deutlich effizienteren Entwicklungszyklen und somit Zeit und Kosten Ersparnis führt.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein erfindungsgemäßes containerisierte Entwicklungsinfrastruktur.
- FIG 2: zeigt eine DevOps-Entwicklungsstruktur gemäß dem Stand der Technik.

### 5. Beschreibung der bevorzugten Ausführungsformen

Im Folgenden werden bevorzugte Ausführungsformen der vorliegenden Erfindung in Bezug auf die Figuren beschrieben.

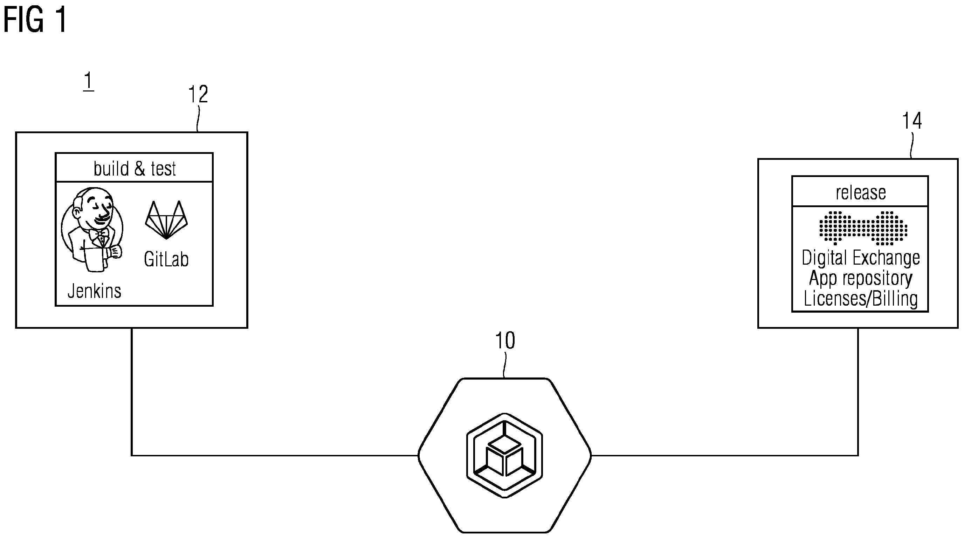

Figur 1 zeigt ein erfindungsgemäßes containerisierte Entwicklungsinfrastruktur 1. Die containerisierte Entwicklungsinfrastruktur 1 weist eine Container-Engine 10 auf, welche die Container 12 und 14 erstellt sowie ausgeführt.

In einer bevorzugten Ausführungsform werden die Container 12, 14 zunächst über von der Container-Engine 10 bereit gestellte Transfer-Mechanismen in eine zentral zugängliche Container-Registry geladen. Die bereitgestellten Container 12 und 14 werden danach von beliebigen Recheneinheit mit der entsprechenden Container-Engine 10 geladen und ausgeführt.

Figur 2 zeigt eine herkömmliche DevOps-Entwicklungsinfrastruktur gemäß dem Stand der Technik, auch Toolchain genannt, wie weiter oben im einleitenden Teil der Beschreibung im Detail erläutert. Im Hinblick auf Figur 2 kann die containerisierte Entwicklungsinfrastruktur gemäß einer Ausführungsform der Erfindung zwei Container 12 und 14 für das Tool Build&Tool oder Release der Toolchain aufweisen. Eine Docker Container-Engine erzeugt zwei entsprechende ausführbare Container für die zwei bereitgestellten Container 12 und 14.

## Patentansprüche

1. Containerisierte Entwicklungsinfrastruktur (1), aufweisend:
a. Mindestens einen ersten Container (12) aufweisend mindestens ein erstes Softwarepaket für zumindest einen Teil der Entwicklungsinfrastruktur;
b. Mindestens einen zweiten Container (14) aufweisend mindestens ein zweites Softwarepaket für zumindest einen Teil der Entwicklungsinfrastruktur; und
c. Mindestens eine Container-Engine (10) auf mindestens einer Recheneinheit, eingerichtet zum Erstellen und Ausführen der mindestens zwei Container (12, 14).

2. Container-Netzwerk (1) nach Anspruch 1, wobei die Container-Engine eine Container-Engine (10) ist, ausgewählt aus der Gruppe bestehend aus: Docker, Kubernetes, LXD und Rocket.

3. Container-Netzwerk (1) nach Anspruch 1 oder Anspruch 2, wobei die Container-Engine (10) durch eine Softwarebereitstellungsanwendung eingerichtet wird, ausgewählt aus der Gruppe bestehend aus: Terrform, Ansible und Vagrant.

4. Container-Netzwerk (1) nach einem der vorhergehenden Ansprüche, wobei die Container-Engine (10), der mindestens eine erste Container (12) und/oder der mindestens eine zweite Container (14) von einem Backend-Management Service verwaltet wird.
